# EUROPEAN PATENT SPECIFICATION

(11) **EP 1 592 492 B1**
(45) Date of publication and mention of the grant of the patent: **28.12.2011**
(21) Application number: 03796238.8
(22) Date of filing: 30.12.2003
(51) Int. Cl.: B01D 50/00, B01D 46/24, B01D 45/12

(54) **APPARATUS FOR ASPIRATING AND DEPURATION OF VOLUMES OF AIR**
VORRICHTUNG ZUM ABSAUGEN UND REINIGEN VON LUFTSTRÖMEN
APPAREIL D'ASPIRATION ET D'EPURATION DE VOLUMES D'AIR

(30) Priority: 28.01.2003 IT BG20030006
(43) Date of publication of application: 09.11.2005
(73) Proprietor: LNS FOX S.r.l., 24126 Bergamo (IT)
(72) Inventor: BORRA, Giorgio, I-24060 Brusaporto (BG) (IT)
(74) Representative: Giavarini, Francesco
(86) International application number: PCT/IB2003/006424
(87) International publication number: WO 2004/067150

(56) References cited:
- EP-A- 0 972 555
- DE-A- 19 654 770
- US-A- 3 902 999
- PATENT ABSTRACTS OF JAPAN vol. 1996, no. 03, 29 March 1996 (1996-03-29) & JP 07 289832 A (AMANO CORP), 7 November 1995 (1995-11-07)
- PATENT ABSTRACTS OF JAPAN vol. 1998, no. 13, 30 November 1998 (1998-11-30) & JP 10 216437 A (SHOWA DENKI KK), 18 August 1998 (1998-08-18)

## Description

The present invention relates to a new apparatus for suction and depuration of volumes of air containing particles in suspension, to be used, for example, in the industrial field, preferably for the filtration of oily mists generated in engineering workshops in areas where oil and lubricant and coolant emulsions are used.

In particular, extensive use of these substances is made in the machining of semi-finished products with machine tools for removal of stock in order to enable reduction of friction and temperature in the region of contact between workpiece and tool. During machining, as a result of the rotary motion of the tool or on account of phenomena of evaporation due to the heat developed, a large part of the mixture is nebulized in the surrounding space, which is usually shielded off from the rest of the environment via the use of protective screens. In this way, masses of air are generated that need to be depurated, before being released into the external working environment, in order to prevent problems of atmospheric pollution and thus guarantee the safety of operators.

Depurators conventionally employed for said purpose normally envisage the use of a series of filter elements, which according to different principles carry out separation of the oily part from the volume of air or more in general separation of the impurities contained therein. An example of such systems is presented in the patent application No. EP0346301. In this device, the air that is to be purified is sucked in as a result of the depression generated by the action of the centrifugal impeller. The mixture is consequently forced to pass within a duct, internally shaped like a helix in order to bestow a vortex-like motion on the flow. In this way, mechanical separation is favoured of the particles of oil that deposit on the walls and that subsequently are collected by gravity in the tank located in the bottom part of the device. The air then traverses a traditional filter, for example a cartridge filter, and then undergoes a final filtration of a centrifugal type by means of the impeller referred to above.

The above device, together with other ones that are similar as regards mode of operation or components, presents the drawback of having considerable spatial encumbrance, above all when it comes to handling large flows of air. Consequently, there arise difficulties as regards displacement and location of the system in its operating site.

Another disadvantage of traditional apparatus is linked to the operations of inspection and maintenance. These currently entail long times and high costs on account of the need to disconnect the pipes for delivery of the air or the need to remove units of the system to replace them with others, perhaps located in parts of the apparatus that are less accessible.

A third unfavourable aspect is linked to the filtering efficiency. This must be as high as possible for the purpose of guaranteeing purification of the air also from solid and liquid pollutants of microscopic dimensions. Current systems frequently do not enable this result to be obtained on account, for example, of a low number of filter elements, or else a low efficiency of the components used. An other apparatus for suction and depuration of volumes of air is known in US-A-390299

The purpose of the invention, as described in what follows, is consequently to provide the possible users with a high-efficiency depuration device, at the same time guaranteeing limited spatial encumbrance and

to present an apparatus that can easily be inspected, which will enable limitation of times and costs linked to maintenance of the system.

Not the least important purpose of the present invention is to provide an apparatus for the suction and depuration of volumes of air that will present high reliability, relative ease of production, and competitive costs.

The above objective and the above purposes, as likewise others that will emerge more clearly from the ensuing description, are achieved by an apparatus for suction and purification of volumes of air containing particles in suspension, said apparatus comprising an external casing that houses within it:
- a suction element, comprising an impeller and a volute or scroll, actuated by an electric motor; and
- at least one first filter element.

The apparatus according to the invention has an external casing comprising a first part and a second part, which is mobile with respect to the first part, that can be coupled together and uncoupled from one another, one of said first or second parts comprising an opening for the suction of said volumes of air to be purified, the other comprising an opening for discharging the same.

The speed and ease of uncoupling of the two parts represent the main advantage of the invention in so far as they enable convenient management of the system, which in operation appears, instead, as a compact enbloc assembly, of limited weight and volume.

Other advantages of the present invention, such as, for example, the high efficiency, will emerge from the ensuing description, which is provided by way of non-limiting example and for which the attached drawings are used as reference, wherein:
- Figure 1 is a front view of the apparatus in a closed configuration, i.e., during operation;
- Figure 2 is a top view of the device;
- Figure 3 is a front view of the apparatus in an open configuration, for the operations of maintenance;
- Figure 4 is a side view in an open configuration; and
- Figure 5 shows the path followed by the volumes of air through the various parts that make up the system.

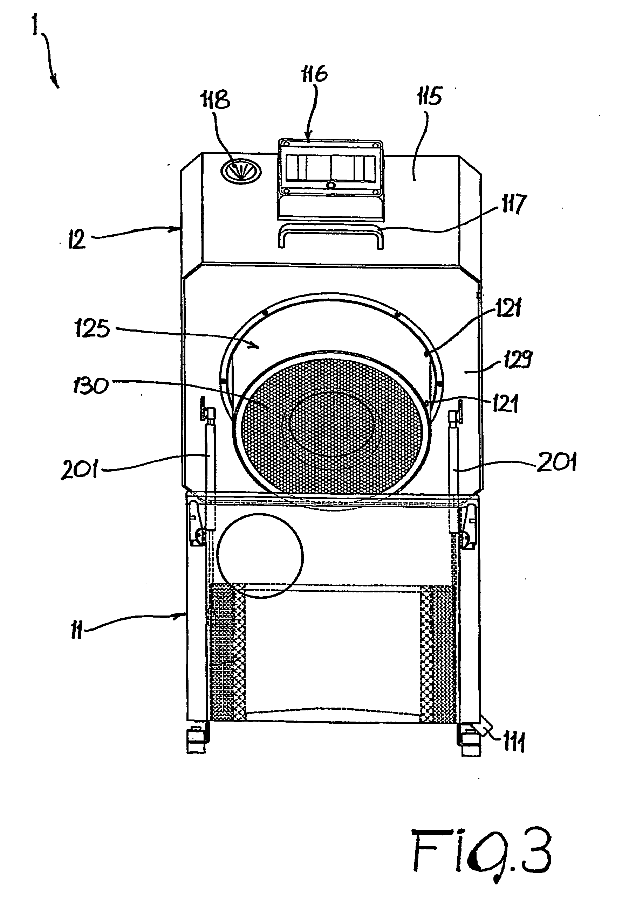

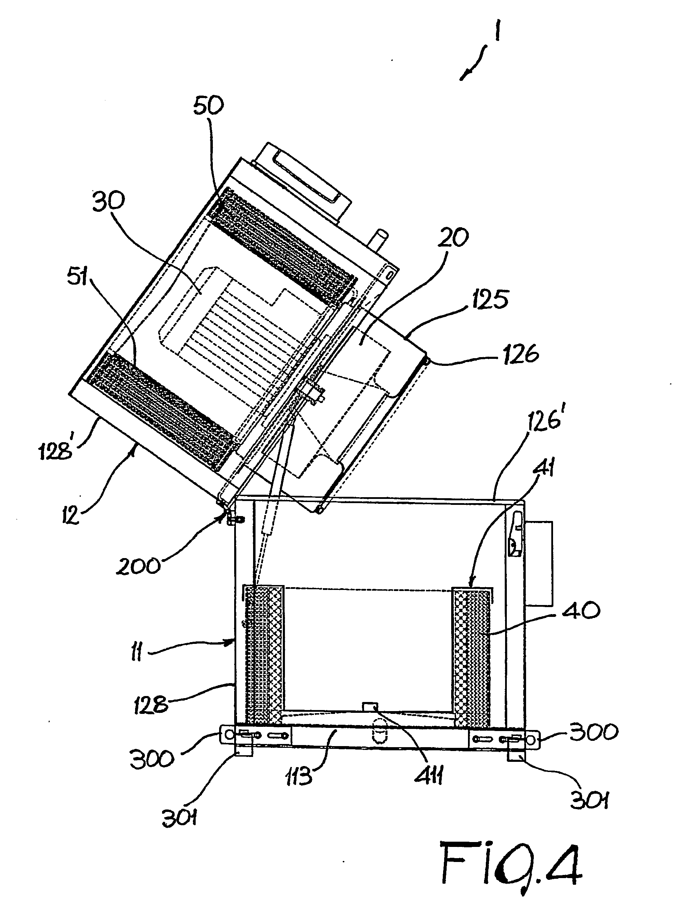

With reference to the above figures, the apparatus according to the invention is consequently made up of an external casing 10, which is formed by two parts that can be easily coupled together and easily separated, and is able to receive within it the elements necessary for suction and filtration of nebulized oil. In particular the present invention envisages the use of a suction element, for example a fan comprising an impeller 20 and a scroll or volute 125, which is actuated by an electric motor 30 and is able to guarantee a filtering stage of a centrifugal type. Also provided is the use of at least one first filter element 40 for carrying out pre-filtering of the mixture. The two parts forming the external casing are fitted together via a turning pair 200, which enables a relative motion of the second part 12, referred to as mobile half-casing, with respect to the first part 11, referred to as fixed half-casing, as shown in Figures 3 and 4.

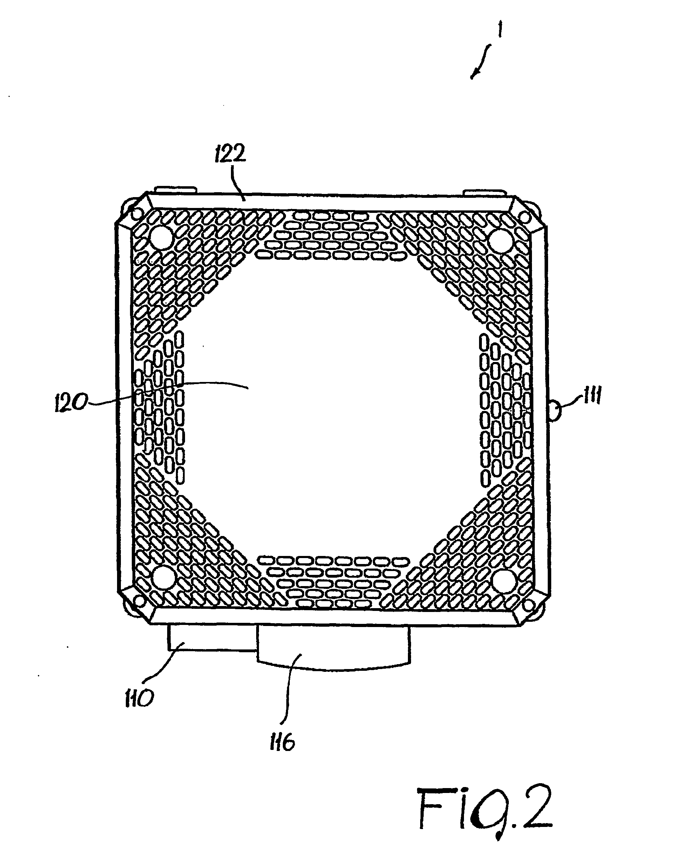

The two components or half-casings preferably have a substantially prismatic shape, with octagonal base, with a first set of four sides having the same dimension and a second set of four sides, alternating with the sides of the first set, having a substantially different dimension with respect to the sides of said first set, as shown in Figure 2. In the embodiment illustrated, on the front face 114 of the first part 11, there is located the suction pipe or duct 110, to which there are connected pipes coming from the environment in which the polluted atmospheres are generated. The second part 12, once again in the front part 115 carries, instead, a control board 116, for governing the electric motor 30, an opening handle 117 for separating the two parts, and finally additional devices, such as for example a manometer 118, used for controlling the level of clogging of the post-filter 50, described hereinafter. Furthermore, via magnetic clamps, the mobile part 12 is closed, at the top, by a grill 120, which enables discharge of the purified air to the external environment.

As indicated above, coupling and uncoupling of the half-casings is obtained via the use of at least one turning pair, for example a hinge 200, anchored on the rear face of the two parts 128 and 128' (see Figure 4). With the use of the handle 117 the system is consequently opened (see Figures 3 and 4), and the configuration thus achieved is maintained by the action of a blocking system 201, which can be obtained, for example, via pneumatic devices or articulated mechanisms. The angle of opening formed enables convenient execution of operations of maintenance and replacement of the filtering components, described hereinafter, without any need to disconnect, for example, the air-delivery pipes. The internal inspection of the two parts appears, in fact, independent, i.e., control of the one can be carried out without intervening on the other. There derives therefore a reduction in the times required for these important operations.

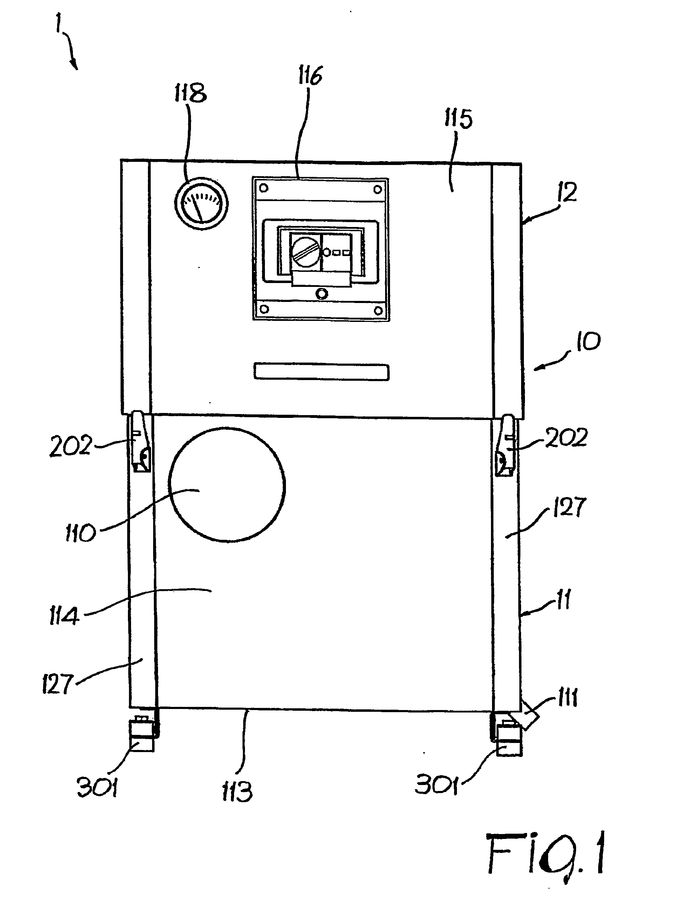

During operation, the system is, instead, kept closed by means of an anchorage, for example, of a mechanical type. In particular, in the embodiment of Figure 1, there is envisaged the use of at least two mechanical hooks positioned, preferably, in the front part of the casing 114, on the faces of smaller extension 127.

For blocking in an open configuration, the invention preferably envisages the use of at least one gas-operated spring 201, connected, on one side, within the rear surface 128 of the fixed half-casing 11 and, at the other end, to the base 129 of the mobile part 12 on the outer side.

The suction fan 20 is rigidly located on the outside of the base 129 of the mobile half-casing 12, whilst the electric motor 30, which enables operation thereof, is instead located inside (see Figure 4), obviously axially aligned with the impeller 20. By the action of the latter there is obtained filtration of a centrifugal type with deposition of the oily substances re-condensed on the inner part of the volute 125, which contains the impeller 20 itself. A protection element, constituted, for example, by a metal mesh 130, is preferably positioned at the inlet of the volute 125 of the impeller 20.

As illustrated in the annexed figures, a first filter element 40 is set within the fixed part 11 for supplying the apparatus with a pre-filtering stage. In particular, the element 40 is preferably made up of three diaphragms of progressive filtration, obtainable, for example, via the arrangement in series of a metal mesh, a layer of glass fibre, and a further filtering layer made of acrylic fibre. In this way an excellent capacity of accumulation of the solid and liquid pollutants is guaranteed. The pre-filter 40 assumes a substantially toroidal shape, with rectangular cross section, and is fixed by means of a metal bracket 41 anchored to the base 113 of the fixed part 11 via a screw equipped with a hand wheel 411, in a position such as to have an axis substantially coinciding with that of the impeller, i.e., of the motor.

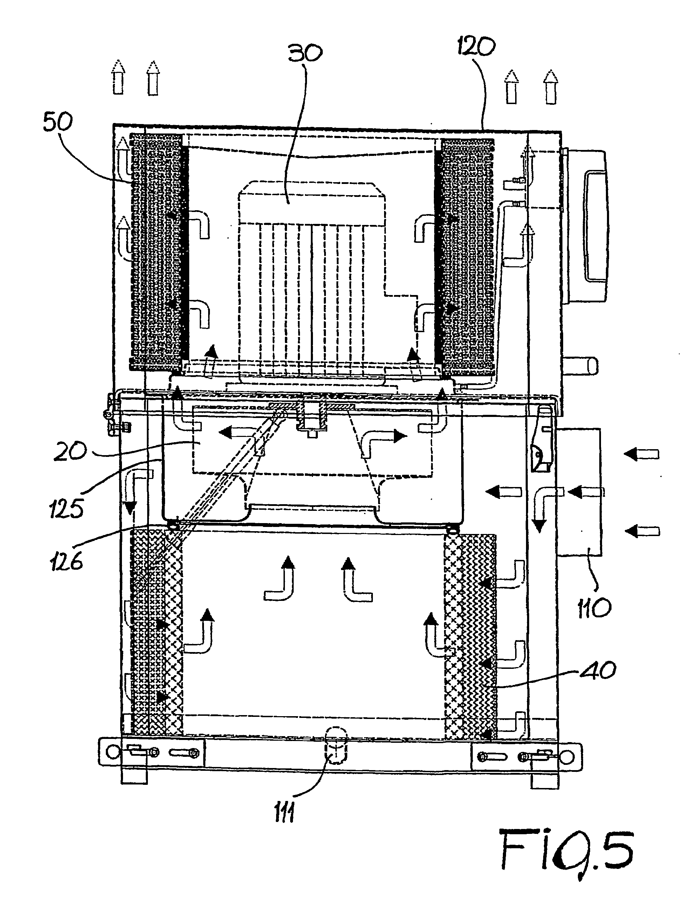

As shown in Figure 5, assembly of the system leads to a positioning of the impeller at the interface between the two parts. In the same figure there may be noted the path of the mixture suctioned. As may be noted, as a result of appropriate seals 126 and 126', the mixture is forced to traverse the pre-filter 40 before reaching the inlet of the centrifugal impeller 20. In this way, pre-filtering of all the air suctioned is guaranteed without any leakage.

Preferably, the apparatus 1 envisages, in the mobile part 12, the positioning of a second filter element 50, referred to as post-filter, having a geometry substantially similar to that of the pre-filter 40, positioned once again with its axis substantially coinciding to that of the motor 30. This element, which may be made, for example, of microfibre glass, enables an increase in the efficiency of the depuration system, representing a third filtering stage. Control of clogging of the filter is obtained, for example, through the use of a manometer 118, which checks the internal pressure of the cartridge filter 50, indicating, or otherwise, the need for a replacement of the component.

In order to increase further the effectiveness of the system, it is then possible to use a protective absorbing filter 51, positioned in contact with the internal surface of the post-filter 50. From Figure 5 it may be noted, consequently, how the air at output from the impeller 20 is channelled by the volute 125 into the mobile half-casing, inside the post-filter 50, where the electric motor 30 is located. In this way, the air performs a convective action of cooling on the motor 30 itself and then traverses the post-filter 50 from the inside outwards, and comes out depurated through the discharge grill 120.

The depuration apparatus 1 preferably envisages positioning of at least one discharge pipe 111 at the base 113 of the fixed half-casing 11 for expulsion of the pollutant elements collected by gravity at the base 113 following upon the action of the pre-filter 40. The impurities can in this way be conveyed, for example, into appropriate basins for their collection and their subsequent disposal.

For a purpose of this sort, a second drainage system can be provided for continuous expulsion of the oil re-condensed on the internal walls of the volute 125 by the centrifugal action of the impeller 20. At least two openings 121, made in the walls of the volute 125, enable the impurities to come out continuously, the impurities then being collected, by gravity, at the base of the fixed part 11 and finally expelled according to the system described above.

The apparatus 1 can be integrated with other devices, aimed, for example, at handling the depurated air, or with further filtering stages. This is rendered possible by exploiting, as interface of connection, the top part 122 of the mobile half-casing 12 through the simultaneous use of anchorage systems, provided for example, by mechanical flanges, screws that can easily be manoeuvred, or magnetic clamps.

On account of this possibility, there is envisaged, in particular, precisely the execution of a supplementary filtration of the air via, for example, a high-efficiency filter element positioned in a containment module appropriately built so that it can be interfaced with the depuration system via the system just referred to above. In this way, the overall efficiency of the apparatus 1 and hence the level of purity reached by the discharged air are further increased.

Positioning of the apparatus 1 is obtained, for example, by exploiting appropriate anti-vibration feet 301 located at the base 113 of the fixed part 11. The feet, as may be noted from

Figure 4, can be integrated with slidable eyebolts 300, which can slide away out of sight and are used for lifting and transportation of the apparatus. At the end of these operations, the eyebolts are reinserted inwards in order to limit the overall dimensions and to prevent any possible encumbrance or obstruction. Their position, during operation or otherwise, is maintained through the use of screws which can easily be manoeuvred.

From the foregoing description there clearly emerge the advantages linked to the use of an apparatus of this sort. In particular, the compact and far from cumbersome configuration of the system enables convenient positioning thereof in the operating site. The technical solutions adopted moreover enable ease of inspection and internal maintenance, with consequent reduction in the times and costs of management. At the same time, the filtration in a number of stages that is provided enables a high overall efficiency of the system to be achieved.

The apparatus for suction and depuration of volumes of air thus devised may undergo modifications and variations, all of which falling within the scope of the inventive idea. In addition, all the items may be replaced by technically equivalent elements. In practice, the materials used, provided that they are compatible with the specific use, as well as the dimensions, may be any whatsoever according to the requirements and the state of the art.

## Claims

1. An apparatus (1) for suction and depuration of volumes of air containing particles in suspension, comprising an external casing (10), which houses, within it:
- a suction element, comprising an impeller (20) and a volute (125), actuated by an electric motor (30); and
- at least one first filter element (40),
wherein the external casing comprises a first part (11) and a second part (12), which is mobile with respect to the first part (11), that can be coupled together and uncoupled from one another, one of said first (11) or second parts (12) comprising an opening for the suction of said volumes of air to be purified, the other comprising an opening for discharging the same, further comprising:
- means of coupling between the first part (11) and the second part (12) comprising a turning pair;
- means of clamping in a closed position;
**characterized in** comprising means for blocking in an open configuration.

2. The apparatus (1) for suction and depuration of volumes of air containing particles in suspension, according to Claim 1, **characterized in that** said means of coupling comprise at least one hinge (200).

3. The apparatus (1) for suction and depuration of volumes of air containing particles in suspension, according to Claim 1 or Claim 2, **characterized in that** said means for blocking in an open configuration comprise at least one gas-operated spring (201).

4. The apparatus (1) for suction and depuration of volumes of air containing particles in suspension, according to one or more of Claims 1 to 3, **characterized in that** said means for clamping in a closed position comprise a system of mechanical hooks.

5. The apparatus (1) for suction and depuration of volumes of air containing particles in suspension, according to one or more of the preceding claims, **characterized in that** said impeller (20) is positioned at the interface between said first (11) and second part (12), and said first filter element (40) is positioned within said first part (11).

6. The apparatus (1) for suction and depuration of volumes of air containing particles in suspension, according to Claim 5, **characterized in that** said first filter element (40) is fixed to the base (113) of said first (11) part through the use of a bracket (41), in a position substantially concentric with respect to the axis of the impeller (20) and of the motor (30).

7. The apparatus (1) for suction and depuration of volumes of air containing particles in suspension, according to one or more of the preceding claims, **characterized in that** it comprises a second filter element (50) having a substantially toroidal geometry, positioned in said second part (12) with an axis substantially coinciding with that of the impeller (20) and of the motor (30).

8. The apparatus (1) for suction and depuration of volumes of air containing particles in suspension, according to one or more of the preceding claims, **characterized in that** it comprises a further filter element (51) positioned in contact with the internal surface of said first filter element (40) and/or of said second filter element (50).

9. The apparatus (1) for suction and depuration of volumes of air containing particles in suspension, according to one or more of the preceding claims, **characterized in that** it comprises a system for discharging the oil captured by the pre-filter, including at least one pipe (111) for expulsion positioned at the base (113) of said first part (11).

10. The apparatus (1) for suction and depuration of volumes of air containing particles in suspension, according to one or more of the preceding claims, **characterized in that** it comprises a system for drainage of the oil re-condensed on the internal walls of said volute, said drainage system comprising at least two openings made on said volute (125).

11. The apparatus (1) for suction and depuration of volumes of air containing particles in suspension, according to one or more of the preceding claims, **characterized in that** it comprises a further filter element, which can be fitted to the external casing (10) of said apparatus (1).

12. The apparatus (1) for suction and depuration of volumes of air containing particles in suspension, according to one or more of the preceding claims, **characterized in that** it comprises anti-vibration feet (301) and/or slidable eyebolts (300) which can slide away out of sight.

## Patentansprüche

1. Vorrichtung (1) zum Ansaugen und Ausscheiden von Luftvolumina, die suspendierte Teilchen enthalten, ein Außengehäuse (10) aufweisend, in dem Folgendes untergebracht ist:
- ein Saugelement, das ein Laufrad (20) und ein Verdichtergehäuse (125) aufweist, angetrieben von einem Elektromotor (30); und
- mindestens ein erstes Filterelement (40),
wobei das Außengehäuse ein erstes Teil (11) und ein zweites, in Bezug auf das erste Teil (11) bewegliches Teil (12) aufweist, die miteinander verbunden und voneinander gelöst werden können, wobei entweder das erste (11) oder das zweite Teil (12) eine Öffnung aufweist zum Ansaugen der Luftvolumina, die gereinigt werden sollen, und das jeweils andere Teil eine Öffnung zu deren Austragung aufweist, ferner aufweisend:
- ein Mittel zum Verbinden des ersten Teils (11) und des zweiten Teils (12), das ein Drehpaar aufweist;
- ein Mittel zum Verspannen in einer geschlossenen Stellung;
**dadurch gekennzeichnet, dass** es Mittel zum Verriegeln in einer offenen Stellung aufweist.

2. Vorrichtung (1) zum Ansaugen und Ausscheiden von Luftvolumina, die suspendierte Teilchen enthalten, nach Anspruch 1, **dadurch gekennzeichnet, dass** das Mittel zum Verbinden mindestens ein Scharnier (200) aufweist.

3. Vorrichtung (1) zum Ansaugen und Ausscheiden von Luftvolumina, die suspendierte Teilchen enthalten, nach Anspruch 1 oder Anspruch 2, **dadurch gekennzeichnet, dass** das Mittel zum Verriegeln in einer offenen Stellung mindestens eine gasbetätigte Feder (201) aufweist.

4. Vorrichtung (1) zum Ansaugen und Ausscheiden von Luftvolumina, die suspendierte Teilchen enthalten, nach einem oder mehreren der Ansprüche 1 bis 3, **dadurch gekennzeichnet, dass** das Mittel zum Verspannen in einer geschlossenen Stellung ein System mechanischer Haken aufweist.

5. Vorrichtung (1) zum Ansaugen und Ausscheiden von Luftvolumina, die suspendierte Teilchen enthalten, nach einem oder mehreren der vorangehenden Ansprüche, **dadurch gekennzeichnet, dass** das Flügelrad (20) an der Grenze zwischen dem ersten (11) und dem zweiten Teil (12) angeordnet ist, und dass das erste Filterelement (40) innerhalb des ersten Teils (11) angeordnet ist.

6. Vorrichtung (1) zum Ansaugen und Ausscheiden von Luftvolumina, die suspendierte Teilchen enthalten, nach Anspruch 5, **dadurch gekennzeichnet, dass** das erste Filterelement (40) anhand einer Klammer (41) an einer Stelle, die im Wesentlichen konzentrisch ist zur Achse des Flügelrades (20) und des Motors (30) an der Basis (113) des ersten Teils (11) befestigt ist.

7. Vorrichtung (1) zum Ansaugen und Ausscheiden von Luftvolumina, die suspendierte Teilchen enthalten, nach einem oder mehreren der vorangehenden Ansprüche, **dadurch gekennzeichnet, dass** sie ein zweites Filterelement (50) mit einer im Wesentlichen toroidalen Geometrie aufweist, das im zweiten Teil (12) angeordnet ist, wobei seine Achse im Wesentlichen mit derjenigen des Flügelrades (20) und des Motors (30) zusammenfällt.

8. Vorrichtung (1) zum Ansaugen und Ausscheiden von Luftvolumina, die suspendierte Teilchen enthalten, nach einem oder mehreren der vorangehenden Ansprüche, **dadurch gekennzeichnet, dass** sie ein weiteres Filterelement (51) aufweist, das in Kontakt mit der Innenfläche des ersten Filterelements (40) und/oder des zweiten Filterelements (50) angeordnet ist.

9. Vorrichtung (1) zum Ansaugen und Ausscheiden von Luftvolumina, die suspendierte Teilchen enthalten, nach einem oder mehreren der vorangehenden Ansprüche, **dadurch gekennzeichnet, dass** es ein System zum Austragen des Öls, das vom Vorfilter abgefangen wird, aufweist, das mindestens eine Leitung (111) zum Austreiben, die an der Basis (113) des ersten Teils (11) angeordnet ist, aufweist.

10. Vorrichtung (1) zum Ansaugen und Ausscheiden von Luftvolumina, die suspendierte Teilchen enthalten, nach einem oder mehreren der vorangehenden Ansprüche, **dadurch gekennzeichnet, dass** sie ein System zum Ablassen des Öls, das wieder an den Innenwänden des Verdichtungsgehäuses kondensiert ist, aufweist, wobei das Ablasssystem mindestens zwei Öffnungen aufweist, die an dem Verdichtergehäuse (125) ausgebildet sind.

11. Vorrichtung (1) zum Ansaugen und Ausscheiden von Luftvolumina, die suspendierte Teilchen enthalten, nach einem oder mehreren der vorangehenden Ansprüche, **dadurch gekennzeichnet, dass** sie ein weiteres Filterelement aufweist, das am Außengehäuse (10) der Vorrichtung (1) angebracht werden kann.

12. Vorrichtung (1) zum Ansaugen und Ausscheiden von Luftvolumina, die suspendierte Teilchen enthalten, nach einem oder mehreren der vorangehenden Ansprüche, **dadurch gekennzeichnet, dass** es vibrationsdämpfende Füße (301) und/oder verschiebbare Ringschrauben (300), die außer Sicht verschoben werden können, aufweist.

## Revendications

1. Appareil (1) d'aspiration et d'épuration de volumes d'air contenant des particules en suspension, comprenant un boîtier externe (10), logeant, en son sein :
- un élément d'aspiration, comprenant un rotor (20) et une volute (125), actionné par un moteur électrique (30) ; et
- au moins un premier élément filtrant (40),
dans lequel le boîtier externe comprend une première partie (11) et une deuxième partie (12), mobile par rapport à la première partie (11), pouvant être couplées ensemble et découplées l'une de l'autre, l'une desdites première (11) ou deuxième (12) parties comprenant une ouverture pour l'aspiration desdits volumes d'air à épurer, l'autre comprenant une ouverture pour décharger ces mêmes volumes, comprenant en outre :
- des moyens d'accouplement entre la première partie (11) et la deuxième partie (12), comprenant un joint tournant ;
- des moyens de serrage en une position fermée ;
**caractérisé en ce qu'**il comprend des moyens pour assurer le blocage en une configuration ouverte.

2. Appareil (1) d'aspiration et d'épuration de volumes d'air contenant des particules en suspension selon la revendication 1, **caractérisé en ce que** lesdits moyens d'accouplement comprennent au moins une charnière (200).

3. Appareil (1) d'aspiration et d'épuration de volumes d'air contenant des particules en suspension selon la revendication 1 ou la revendication 2, **caractérisé en ce que** lesdits moyens pour assurer le blocage en une configuration ouverte comprennent au moins un ressort à gaz (201).

4. Appareil (1) d'aspiration et d'épuration de volumes d'air contenant des particules en suspension selon une ou plusieurs des revendications 1 à 3, **caractérisé en ce que** lesdits moyens de serrage en une position fermée comprennent un système de crochets mécaniques.

5. Appareil (1) d'aspiration et d'épuration de volumes d'air contenant des particules en suspension selon une ou plusieurs des revendications précédentes, **caractérisé en ce que** ledit rotor (20) est positionné à l'interface entre lesdites première (11) et deuxième partie (12), et ledit premier élément filtrant (40) est positionné à l'intérieur de ladite première partie (11).

6. Appareil (1) d'aspiration et d'épuration de volumes d'air contenant des particules en suspension selon la revendication 5, **caractérisé en ce que** ledit premier élément filtrant (40) est fixé à la base (113) de ladite première (11) partie, par utilisation d'une console (41), en une position sensiblement concentrique par rapport à l'axe du rotor (20) et du moteur (30).

7. Appareil (1) d'aspiration et d'épuration de volumes d'air contenant des particules en suspension selon une ou plusieurs des revendications précédentes, **caractérisé en ce qu'**il comprend un deuxième élément filtrant (50), ayant une géométrie sensiblement toroïdale, positionné dans ladite deuxième partie (12) avec un axe coïncidant sensiblement avec celui du rotor (20) et du moteur (30).

8. Appareil (1) d'aspiration et d'épuration de volumes d'air contenant des particules en suspension selon une ou plusieurs des revendications précédentes, **caractérisé en ce qu'**il comprend un autre élément filtrant (51), positionné en contact avec la surface interne dudit premier élément filtrant (40) et/ou dudit deuxième élément filtrant (50).

9. Appareil (1) d'aspiration et d'épuration de volumes d'air contenant des particules en suspension selon une ou plusieurs des revendications précédentes, **caractérisé en ce qu'**il comprend un système pour décharger l'huile capturée par le pré-filtre, incluant au moins un tube (111) pour l'expulsion, positionné à la base (113) de ladite première partie (11).

10. Appareil (1) d'aspiration et d'épuration de volumes d'air contenant des particules en suspension selon une ou plusieurs des revendications précédentes, **caractérisé en ce qu'**il comprend un système pour assurer le drainage de l'huile re-condensée sur les parois internes de ladite volute, ledit système de drainage comprenant au moins deux ouvertures réalisées sur ladite volute (125).

11. Appareil (1) d'aspiration et d'épuration de volumes d'air contenant des particules en suspension selon une ou plusieurs des revendications précédentes, **caractérisé en ce qu'**il comprend un autre élément filtrant, pouvant être monté sur le boîtier externe (10) dudit appareil (1).

12. Appareil (1) d'aspiration et d'épuration de volumes d'air contenant des particules en suspension selon une ou plusieurs des revendications précédentes, **caractérisé en ce qu'**il comprend des pieds anti-vibrations (301) et/ou des boulons à oeil (300) coulissants, pouvant coulisser pour disparaître hors de vue.
